# EUROPEAN PATENT SPECIFICATION

(11) **EP 3 922 513 B1**
(45) Date of publication and mention of the grant of the patent: **08.11.2023**
(21) Application number: 20179753.7
(22) Date of filing: 12.06.2020
(51) Int. Cl.: B60P 7/08

(54) **DETECTING LOAD SHIFT OF CARGO ON A VEHICLE AND/OR A TRAILER**
ERFASSUNG DER LASTVERLAGERUNG VON LADEGUT AUF EINEM FAHRZEUG UND/ODER EINEM ANHÄNGER
DÉTECTION DE DÉPLACEMENT DE CHARGE DE CARGAISON SUR UN VÉHICULE ET/OU UNE REMORQUE

(43) Date of publication of application: 15.12.2021
(73) Proprietor: Ningbo Geely Automobile Research & Development Co. Ltd., Hangzhou Bay New District Ningbo 315336 (CN); Zhejiang Geely Holding Group Co., Ltd., Hangzhou, Zhejiang 310051 (CN)
(72) Inventor: JOHANSSON, Jonathan, 417 14 GÖTEBORG (SE); NILSSON, Magnus, 448 37 FLODA (SE)
(74) Representative: Zacco Sweden AB

(56) References cited:
- EP-A1- 3 453 568
- DE-A1-102014 012 508
- US-A1- 2013 162 420

## Description

### TECHNICAL FIELD

The present disclosure relates generally to the field of load shift of cargo. More particularly, it relates to detecting load shift of cargo on a vehicle and/or a trailer during transport.

### BACKGROUND

A user that has strapped down cargo (i.e., load) on a vehicle, e.g. on the roof of the vehicle, and/or a trailer, wherein the strapped down cargo is not visible to the user during transport, may cause the user to become worried that the strapped down cargo is about to slip its bonds and escape and pose a danger to other vehicles in traffic.

A first drawback of the strapped down cargo is that the user may become worried about the stability of the cargo during transport.

A second drawback of the strapped down cargo is that instability of the cargo during transport may pose a danger to other vehicles in traffic.

Therefore, there is a need for approaches for detecting load shift of cargo on a vehicle and/or a trailer during transport. One example of art in the field is US 2013/162420 A1 that discloses a combination tie strap tensioning assembly with tension monitor. DE 10 2014 012508 A1 discloses the preamble of claim 1.

### SUMMARY

It should be emphasized that the term "comprises/comprising" when used in this specification is taken to specify the presence of stated features, integers, steps, or components, but does not preclude the presence or addition of one or more other features, integers, steps, components, or groups thereof. As used herein, the singular forms "a", "an" and "the" are intended to include the plural forms as well, unless the context clearly indicates otherwise.

Generally, when an apparatus is referred to herein, it is to be understood as a physical product. The physical product may comprise one or more parts, such as controlling circuitry in the form of one or more controllers, one or more processors, or the like.

It is an object of some embodiments to solve or mitigate, alleviate, or eliminate at least some of the above or other drawbacks.

According to a first aspect, this is achieved by a method for detecting load shift of cargo on a vehicle and/or a trailer during transport, wherein cargo is restrained to the vehicle and/or the trailer by one or more restraining components.

The method comprises obtaining sensor data of the one or more restraining components via one or more sensors, wherein the one or more sensors are arranged on the vehicle and/or the trailer, and the sensor data comprises image data and/or video data.

The method further comprises receiving the obtained sensor data in a controlling circuitry, comparing the received sensor data over time in the controlling circuitry in order to establish differences in the received sensor data, the comparing of the received sensor data comprising a frame-by-frame analysis of the obtained image data and/or video data for establishing differences per frame, and determining in the controlling circuitry whether any established differences in the received sensor data meet or exceed a set threshold for the one or more restraining components, wherein the set threshold is indicative of movement in the one or more restraining components capable of allowing load shift of the cargo, by determining a time between a first and a second frame and a position of the monitored restraining component at the first respectively at the second frame in order to establish if there are any differences in position of the restraining component.

An advantage of some embodiments is that approaches for detecting load shift of cargo on a vehicle and/or a trailer during transport are provided.

Yet an advantage of some embodiments is that a user is less worried about the stability of the cargo during transport as one or more restraining components are monitored, and instability of the cargo in terms of load shift is detected and notified to the user.

Yet an advantage of some embodiments is that safety for other vehicles in traffic is increased as one or more restraining components is monitored during transport, and instability of the cargo in terms of load shift is detected and notified to the user.

Yet an advantage of some embodiments is that insurance liability is reduced for vehicles and/or trailers with cargo as one or more restraining components are monitored during transport and thereby reducing the risk of the cargo slipping its bonds and escaping.

Yet an advantage of some embodiments is that an early detection of instability of the cargo in terms of load shift during transport is enabled as the monitoring is focused on the one or more restraining components.

Yet an advantage of some embodiments is that the focused monitoring on the one or more restraining components reduces the processing needed, compared to prior art approaches, to establish differences in the received sensor data.

Yet an advantage of some embodiments is that load shift of cargo is identified before the cargo slips its bonds and escapes.

Yet an advantage of some embodiments is that a risk is reduced of a vehicle being caused to swerve and crash due to load shifted cargo on a connected trailer.

In some embodiments, the one or more sensors are arranged on the vehicle and/or the trailer to have a non-obstructed view of the one or more restraining components.

An advantage of some embodiments is that any movement in the in the restraining components is observed.

In some embodiments, the one or more sensors are arranged on the vehicle and/or the trailer to be operably connected to the one or more restraining components and configured to measure vibrations in the one or more restraining components.

An advantage of some embodiments is that any vibrations or shock caused by movement in the restraining components is detected.

In some embodiments, the one or more restraining components comprise one or more fastening components connected and/or fixated to one or more load fixation components.

An advantage of some embodiments is that since load shift of cargo typically starts with movements in the fastening components and/or in the load fixation components an early detection of movement in these restraining components enables an early detection of load shift of cargo.

In some embodiments, the one or more load fixation components comprise one or more of: rails, tie-downs, chassi, and towbar.

An advantage of some embodiments is that different types of load fixation components may be monitored in order to detect movement in the load fixation components.

In some embodiments, the one or more fastening components comprise one or more of: ropes, nets, chains, ratchet straps, tape, wire cable, rubber cord, and straps.

An advantage of some embodiments is that different types of fastening components may be monitored in order to detect movement in the fastening components.

In some embodiments, the one or more sensors comprise piezoelectric sensors.

An advantage of some embodiments is that the piezoelectric sensors provide data which may be processed and analysed in order establish differences in the received sensor data over time.

In some embodiments, the sensor data comprises vibration data.

An advantage of some embodiments is that the vibration data is suitable for being processed and analysed in order establish differences in the received sensor data over time.

In some embodiments, the controlling circuitry further comprises a buffer for temporarily storing the received data before comparison.

An advantage of some embodiments is that received sensor data may be stored temporarily and processed in due time without overloading the controlling circuitry.

In some embodiments, the controlling circuitry and/or the buffer is comprised completely or partially in the vehicle and/or remotely in a cloud environment.

An advantage of some embodiments is that processing capacity and/or storing capacity may be scalable by processing and/or storing completely or partially in the vehicle respectively in the cloud environment.

In some embodiments, cargo is restrained to the roof of the vehicle and/or on the trailer.

An advantage of some embodiments is that one or more restraining components may be utilized to restrain the cargo on the roof of the vehicle and/or on the trailer.

In some embodiments, the method further comprises notifying a user of the vehicle via a display and/or a sound in the vehicle of movement in the one or more restraining components capable of allowing load shift of the cargo.

An advantage of some embodiments is that a user may be notified during transport and may take actions based on the notification and thereby increasing security for other vehicles in traffic.

A second aspect is a computer program product comprising a non-transitory computer readable medium, having thereon a computer program comprising program instructions. The computer program is loadable into a data processing unit and configured to cause execution of the method according to the first aspect when the computer program is run by the data processing unit.

A third aspect is a system for detecting load shift of cargo on a vehicle and/or a trailer during transport, wherein cargo is restrained to the vehicle and/or the trailer by one or more restraining components.

The system comprises controlling circuitry being configured to cause obtainment of sensor data of the one or more restraining components via one or more sensors, wherein the one or more sensors are arranged on the vehicle and/or the trailer.

The controlling circuitry being further configured to cause reception of the obtained sensor data, comparison of the received sensor data over time in order to establish differences in the received sensor data, and determination of whether any established differences in the received sensor data meet or exceed a set threshold for the one or more restraining components, wherein the set threshold is indicative of movement in the one or more restraining components capable of allowing load shift of the cargo.

An advantage of some embodiments is that approaches for detecting load shift of cargo on a vehicle and/or a trailer during transport are provided.

Yet an advantage of some embodiments is that a user is less worried about the stability of the cargo during transport as one or more restraining components are monitored, and instability of the cargo in terms of load shift is detected and notified to the user.

Yet an advantage of some embodiments is that safety for other vehicles in traffic is increased as one or more restraining components is monitored during transport, and instability of the cargo in terms of load shift is detected and notified to the user.

Yet an advantage of some embodiments is that insurance liability is reduced for vehicles and/or trailers with cargo as one or more restraining components are monitored during transport and thereby reducing the risk of the cargo slipping its bonds and escaping.

Yet an advantage of some embodiments is that an early detection of instability of the cargo in terms of load shift during transport is enabled as the monitoring is focused on the one or more restraining components.

Yet an advantage of some embodiments is that the focused monitoring on the one or more restraining components reduces the processing needed, compared to prior art approaches, to establish differences in the received sensor data.

Yet an advantage of some embodiments is that load shift of cargo is identified before the cargo slips its bonds and escapes.

Yet an advantage of some embodiments is that a risk is reduced of a vehicle being caused to swerve and crash due to load shifted cargo on a connected trailer.

In some embodiments, the one or more sensors are arranged on the vehicle and/or the trailer to have a non-obstructed view of the one or more restraining components.

An advantage of some embodiments is that any movement in the in the restraining components is observed.

In some embodiments, the one or more sensors are arranged on the vehicle and/or the trailer to be operably connected to the one or more restraining components and configured to measure vibrations in the one or more restraining components.

An advantage of some embodiments is that any vibrations or shock caused by movement in the restraining components is detected.

In some embodiments, the one or more restraining components comprise one or more fastening components connected and/or fixated to one or more load fixation components.

An advantage of some embodiments is that since load shift of cargo typically starts with movements in the fastening components and/or in the load fixation components an early detection of movement in these restraining components enables an early detection of load shift of cargo.

In some embodiments, the controlling circuitry further comprises a buffer for temporarily storing the received data before comparison.

An advantage of some embodiments is that received sensor data may be stored temporarily and processed in due time without overloading the controlling circuitry.

In some embodiments, the controlling circuitry and/or the buffer is comprised completely or partially in the vehicle and/or remotely in a cloud environment.

An advantage of some embodiments is that processing capacity and/or storing capacity may be scalable by processing and/or storing completely or partially in the vehicle respectively in the cloud environment.

In some embodiments, the system is further configured to cause notification to a user of the vehicle via a display and/or a sound in the vehicle of movement in the one or more restraining components capable of allowing load shift of the cargo.

An advantage of some embodiments is that a user may be notified during transport and may take actions based on the notification and thereby increasing security for other vehicles in traffic.

In some embodiments, the system is continuously active during transport for detecting load shift of cargo on the vehicle and/or the trailer or only active when the user of the vehicle activates it during transport.

An advantage of some embodiments is that when the system is continuously active during transport the user is not burdened with remembering to activate the system.

An advantage of some embodiments is that when the system is only active when the user activates it is that the user chooses when the function is to be activated.

A fourth aspect is a vehicle comprising the system according to the third aspect.

Any of the above aspects may additionally have features identical with or corresponding to any of the various features as explained above for any of the other aspects.

### BRIEF DESCRIPTION OF THE DRAWINGS

Further objects, features and advantages will appear from the following detailed description of embodiments, with reference being made to the accompanying drawings. The drawings are not necessarily to scale, emphasis instead being placed upon illustrating the example embodiments.
Figure 1a is a flowchart illustrating example method steps according to some embodiments;
Figure 1b is a flowchart illustrating example method steps according to some embodiments;
Figure 2a is a schematic drawing illustrating an example system according to some embodiments;
Figure 2b is a schematic drawing illustrating an example system according to some embodiments;
Figure 2c is a schematic drawing illustrating an example system according to some embodiments;
Figure 3 is a schematic drawing illustrating an example system according to some embodiments;
Figure 4 is a schematic block diagram illustrating an example apparatus according to some embodiments; and
Figure 5 is a schematic drawing illustrating an example computer readable medium according to some embodiments.

### DETAILED DESCRIPTION

As already mentioned above, it should be emphasized that the term "comprises/comprising" when used in this specification is taken to specify the presence of stated features, integers, steps, or components, but does not preclude the presence or addition of one or more other features, integers, steps, components, or groups thereof. As used herein, the singular forms "a", "an" and "the" are intended to include the plural forms as well, unless the context clearly indicates otherwise.

Embodiments of the present disclosure will be described and exemplified more fully hereinafter with reference to the accompanying drawings. The solutions disclosed herein can, however, be realized in many different forms and should not be construed as being limited to the embodiments set forth herein.

As mentioned above, a first drawback of the strapped down cargo is that the user may become worried about the stability of the cargo during transport.

Further, as mentioned above, a second drawback of the strapped down cargo is that instability of the cargo during transport may pose a danger to other vehicles in traffic.

In the following, embodiments will be presented where approaches for detecting load shift of cargo on a vehicle and/or a trailer during transport are described.

Detection, as described herein, typically comprises of detection of movement or vibration caused by movement in one or more restraining components arranged to restrict cargo on a vehicle and/or a trailer.

Cargo, as described herein, typically comprises load restrained by one or more restraining component on a vehicle and/or a trailer.

A vehicle, as described herein, typically comprises a vehicle capable of being loaded with cargo and transporting the loaded cargo.

A trailer, as described herein, typically comprises a vehicle configured to be loaded with cargo and which is not capable of moving on its own but is typically connectable to a vehicle which may pull the trailer.

It should be noted that, even if embodiments are described herein in the context of detecting load shift of cargo on a vehicle and/or a trailer during transport, some embodiments may be equally applicable and/or beneficial also in other contexts wherein load shift of cargo is detected.

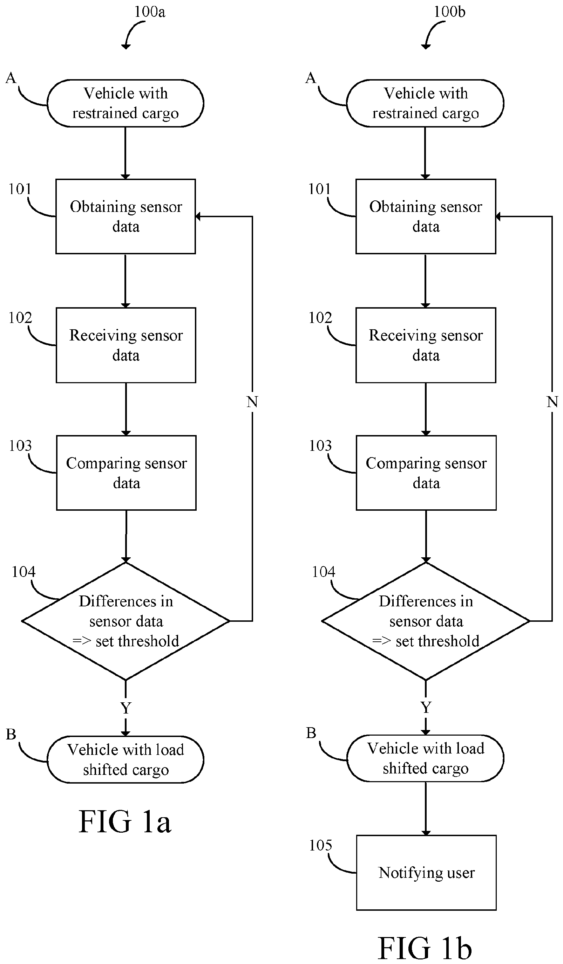

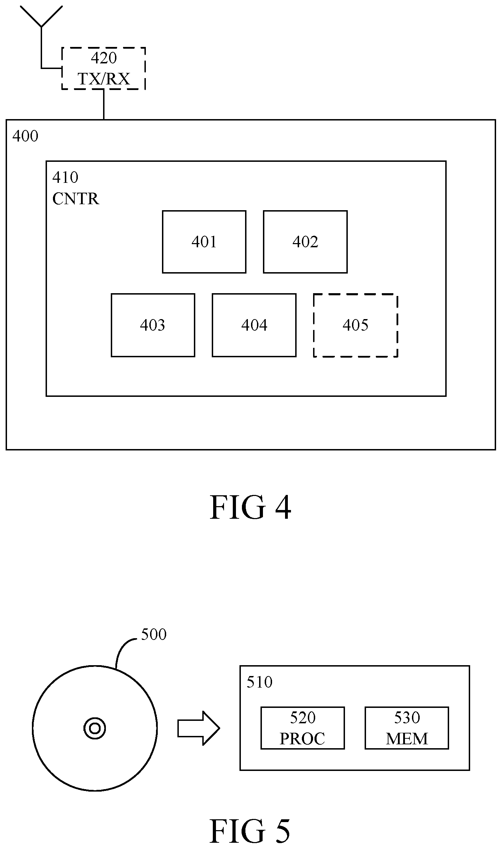

Figure 1a is a flowchart illustrating method steps of an example method 100a according to some embodiments. The method 100a is for detecting load shift of cargo on a vehicle and/or a trailer during transport, wherein cargo is restrained to the vehicle and/or the trailer by one or more restraining components. Thus, the method 100a may, for example, be performed by the apparatus 400 and/or the controller 410 of Figure 4; all of which will be described later herein.

The method 100a comprises the following steps.

The method 100a starts with a state A of a vehicle - vehicle with restrained cargo.

In step 101, sensor data of the one or more restraining components is obtained via one or more sensors, wherein the one or more sensors are arranged on the vehicle and/or the trailer.

In some embodiments, the one or more sensors are arranged on the vehicle and/or the trailer to have a non-obstructed view of the one or more restraining components. Alternatively or additionally, the one or more sensors may be arranged on the one or more restraining components to have a non-obstructed view of other restraining components.

Alternatively or additionally, the one or more sensors may be arranged on the cargo to have a non-obstructed view of the one or more restraining components.

In some embodiments, the one or more sensors comprise image sensors and/or camera sensors.

In some embodiments, the one or more sensors are arranged on the vehicle and/or the trailer to be operably connected to the one or more restraining components and configured to measure vibrations in the one or more restraining components.

Alternatively or additionally, the one or more sensors may be operably connected to rails and configured to measure vibrations and/or shock in the rails caused by movement in the one or more restraining components.

For example, the one or more sensors may be embedded in the rails.

In some embodiments, the one or more sensors comprise vibration sensors.

For example, the one or more vibration sensors may comprise piezoelectric sensors.

Alternatively or additionally, the one or more sensors arranged on the vehicle may comprise image sensors and/or camera sensors as well as vibration sensors.

In some embodiments, the one or more restraining components comprise one or more fastening components connected and/or fixated to one or more load fixation components.

In some embodiments, the one or more load fixation components comprise one or more of: rails, tie-downs, chassi, and towbar.

In some embodiments, the one or more fastening components comprise one or more of: ropes, nets, chains, ratchet straps, tape, wire cable, rubber cord, and straps.

In some embodiments, cargo is restrained to the roof of the vehicle and/or on the trailer.

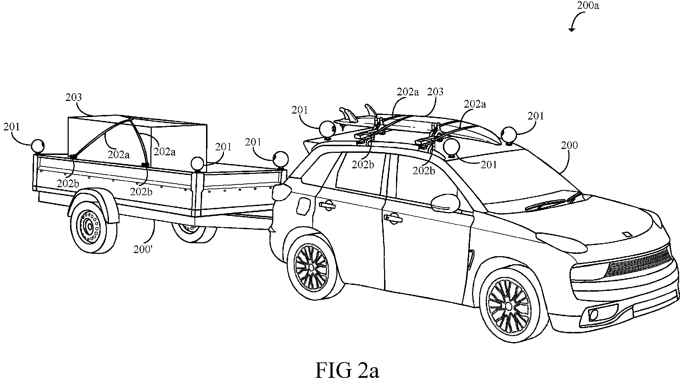

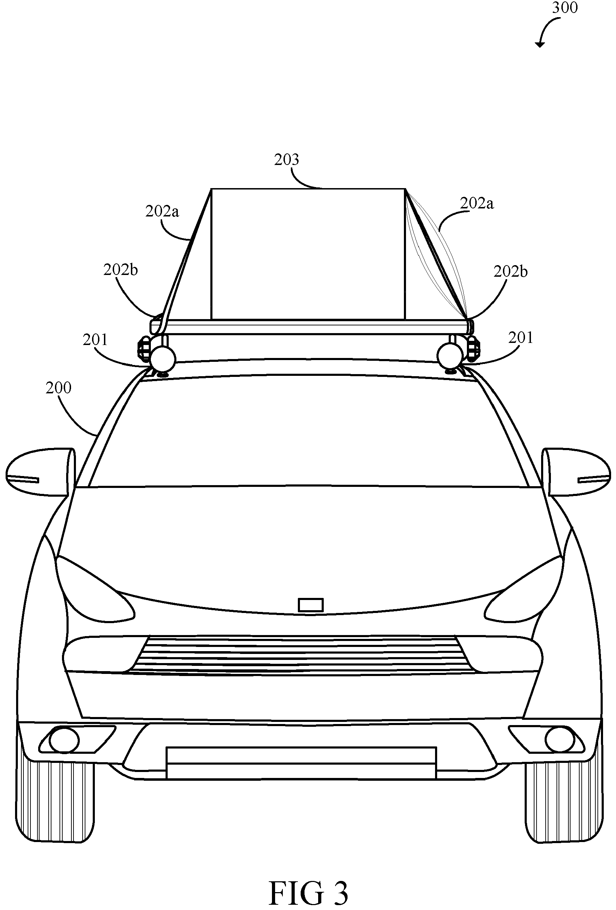

For example, straps may be connected and fixated to rails of a vehicle for restraining cargo to the roof of a vehicle. The one or more restraining components to be monitored, i.e., to obtain image/camera/vibration sensor data from, comprise the points of which the straps restraining the load are fixated to the rails (i.e., load fixation components) and/or one or more sections of the actual straps (reference to Figures 2a-c and Figure 3).

In step 102, the obtained sensor data is received in a controlling circuitry.

In some embodiments, the controlling circuitry further comprises a buffer for temporarily storing the received data before comparison.

In some embodiments, the controlling circuitry and/or the buffer is comprised completely or partially in the vehicle and/or remotely in a cloud environment.

Alternatively or additionally, the controlling circuitry may be operably connected to the vehicle and may be comprised partially or completely in a cloud environment.

In some embodiments, the sensor data comprises image data and/or video data and/or vibration data.

In step 103, the received sensor data is compared over time in the controlling circuitry in order to establish differences in the received sensor data.

According to the invention, the comparing of the received sensor data comprises a frame-by-frame analysis for establishing differences per frame.

In some embodiments, the comparing of the received sensor data comprises an analysis of frequencies.

According to the invention, the analysis comprises determining a time between a first and a second frame and an (approximate) position of the monitored restraining component at the first respectively at the second frame in order to establish if there are any differences in position, e.g., to determine if the restraining component is in the same place, wherein low frequencies are indicative of a low tension in the restraining component and a possible problem in terms of load shift.

In some embodiments, the comparing of the received sensor data comprises analysis of the vibration data, i.e., vibration levels over time, to determine if the restraining component is loose, wherein high vibration levels are indicative of a low tension in the restraining component and a possible problem in terms of load shift.

In step 104, it is determined in the controlling circuitry whether any established differences in the received sensor data meet or exceed a set threshold for the one or more restraining components, wherein the set threshold is indicative of movement in the one or more restraining components capable of allowing load shift of the cargo.

Alternatively or additionally, the set threshold may differ for different restraining components. For example, the load fixation component may have a set threshold which is lower than a set threshold for the fastening components as the load fixation component provides fixation to the fastening components and should have a lower tolerance, i.e., threshold, for movement than for e.g. a strap connected and fixated to the load fixation component.

Alternatively or additionally, the set threshold may differ during transport.

For example, during transport, when the vehicle is moving at 30 km/h, the threshold may be set to exceed movement caused by air resistance and vibrations normally generated at 30 km/h in the one or more restraining components. Hence, the set threshold should have a lower tolerance for movement in lower speeds as there is typically less movements generated in lower speeds by air resistance and vibrations.

For example, during transport, when the vehicle is moving at 110 km/h, the threshold may be set to exceed movement caused by air resistance and vibrations normally generated at 110 km/h in the one or more restraining components. Hence, the set threshold should have a higher tolerance for movement in higher speeds as there is typically more movements generated in higher speeds by air resistance and vibrations.

The method 100a ends with a state B of the vehicle - vehicle with load shifted cargo - when it is determined that there is movement in the one or more restraining components capable of allowing load shift of the cargo.

Figure 1b is a flowchart illustrating method steps of an example method 100b according to some embodiments. The method 100b is for detecting load shift of cargo on a vehicle and/or a trailer during transport, wherein cargo is restrained to the vehicle and/or the trailer by one or more restraining components. Thus, the method 100b may, for example, be performed by the apparatus 400 and/or the controller 410 of Figure 4; all of which will be described later herein.

The method 100b comprises the following steps.

The method 100b starts with a state A of a vehicle - vehicle with restrained cargo.

In step 101, sensor data of the one or more restraining components is obtained via one or more sensors, wherein the one or more sensors are arranged on the vehicle and/or the trailer to have a non-obstructed view of one or more restraining components (corresponding to step 101 of Figure 1a).

In step 102, the obtained sensor data is received in a controlling circuitry (corresponding to step 102 of Figure 1a).

In step 103, the received sensor data is compared over time in the controlling circuitry in order to establish differences in the received sensor data (corresponding to step 103 of Figure 1a).

In step 104, it is determined in the controlling circuitry whether any established differences in the received sensor data meet or exceed a set threshold for the one or more restraining components, wherein the set threshold is indicative of movement in the one or more restraining components capable of allowing load shift of the cargo (corresponding to step 104 of Figure 1a).

The method 100b includes a state B of the vehicle - vehicle with load shifted cargo - when it is determined that there is movement in the one or more restraining components capable of allowing load shift of the cargo.

In optional step 105, in some embodiments, a user of the vehicle is notified via a display and/or a sound in the vehicle of movement in the one or more restraining components capable of allowing load shift of the cargo.

Alternatively or additionally, the user may stop the vehicle in response to the notification and further restrict the cargo on the vehicle and/or the trailer.

Alternatively or additionally, the user may ignore the notification and manually set a higher threshold for movement in the one or more restraining components.

For example, the threshold for the load fixation components(s) may be kept but the threshold of the fastening components may be set to higher in case air resistance causes more movement than normally in the fastening components.

Figure 2a is a schematic drawing illustrating components of an example system 200a according to some embodiments. The system 200a is for detecting load shift of cargo on a vehicle and/or a trailer during transport, wherein cargo is restrained to the vehicle and/or the trailer by one or more restraining components. Thus, the system 200a may, for example, comprise the apparatus 400 and/or the controller 410 of Figure 4; all of which will be described later herein, as well as be configured to perform the method steps of Figure 1a and/or Figure 1b.

The system 200a comprises the following components.

Cargo 203 is loaded and restricted on the roof of a vehicle 200 and on a trailer 200' connected to the vehicle 200.

The cargo 203 is restricted on the vehicle 200 and on the trailer 200' by one or more restraining components 202a and 202b.

The restraining components comprise fastening components 202a connected and/or fixated to one or more load fixation components 202b.

In the system 200a, straps, i.e., fastening components 202a, are connected and fixated to rails, i.e., load fixation components 202b, on the roof of the vehicle 200 for restraining the cargo 203 (e.g., a surfboard). The one or more restraining components, i.e., the fastening components 202a and/or load fixation components 202b, to be monitored, i.e., to obtain sensor data from, comprise the points of which the straps restraining the load are fixated to the rails (i.e., the load fixation components) and/or one or more sections of the actual straps (i.e., the fastening components).

In the system 200a, a trailer 200' in a similar manner as the vehicle 200, carries restrained cargo (e.g., a box) 203. The cargo 203 is restrained by straps, i.e., fastening components 202a, which are connected and fixated to edges of the trailer 200', i.e., load fixation components 202b, for restraining the cargo 203. The one or more restraining components, i.e., the fastening components 202a and/or load fixation components 202b, to be monitored, i.e., to obtain sensor data from, comprise the points of which the straps 202a restraining the load 203 are fixated to the rails 202b (i.e., load fixation components) and/or one or more sections of the actual straps (i.e., the fastening components).

The one or more restraining components 202a and 202b are monitored by one or more sensors 201 arranged on the vehicle 200 and the trailer 200' to have a non-obstructed view (i.e., a clear view) of the one or more restraining components 202a and 202b.

For example, the one or more sensors 201 may comprise a rear camera, e.g., a rear camera for parking assistance, on the vehicle 200 which has a clear view of the trailer 200' and the one or more restraining components 202a and 202b.

Alternatively or additionally, the one or more sensors 201 may be arranged on the one or more restraining components 202a and 202b to have a non-obstructed view of other restraining components 202a and 202b.

Alternatively or additionally, the one or more sensors 201 may be arranged on the cargo 203 to have a non-obstructed view of the restraining components 202a and 202b.

In the system 200a, the one or more sensors 201 comprise image sensors and/or camera sensors configured to obtain sensor data, e.g., image data and/or video data, of the one or more restraining components 202a and 202b during transport.

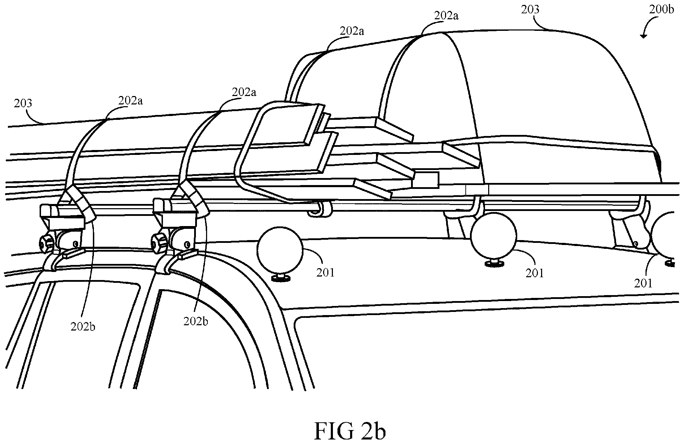

Figure 2b is a schematic drawing illustrating components of an example system 200b according to some embodiments. The system 200b is for detecting load shift of cargo on a vehicle and/or a trailer during transport, wherein cargo is restrained to the vehicle and/or the trailer by one or more restraining components. Thus, the system 200b may, for example, comprise the apparatus 400 and/or the controller 410 of Figure 4; all of which will be described later herein, as well as be configured to perform the method steps of Figure 1a and/or Figure 1b.

The system 200b comprises the following components.

Cargo 203 is loaded and restricted on the roof of a vehicle.

The cargo 203 (e.g., a bathtub and wooden planks) is restricted on the vehicle by one or more restraining components 202a and 202b.

The restraining components comprise fastening components 202a connected and/or fixated to one or more load fixation components 202b.

In the system 200b, straps, i.e., fastening components 202a, are connected and fixated to rails, i.e., load fixation components 202b, on the roof of the vehicle 200 for restraining the cargo 203. The one or more restraining components, i.e., the fastening components 202a and/or load fixation components 202b, to be monitored, i.e., to obtain sensor data from, comprise the points of which the straps restraining the load are fixated to the rails (i.e., load fixation components) and/or one or more sections of the actual straps (i.e., fastening components).

The one or more restraining components 202a and 202b are monitored by one or more sensors 201 arranged on the vehicle (i.e., on the roof of the vehicle) to have a non-obstructed view (i.e., a clear view) of the one or more restraining components 202a and 202b.

Alternatively or additionally, the one or more sensors 201 may be arranged on the one or more restraining components 202a and 202b to have a non-obstructed view of other restraining components 202a and 202b.

Alternatively or additionally, the one or more sensors 201 may be arranged on the cargo 203 to have a non-obstructed view of the restraining components 202a and 202b.

In the system 200b, the one or more sensors 201 comprise image sensors and/or camera sensors configured to obtain sensor data, e.g., image data and/or video data, of the one or more restraining components 202a and 202b during transport.

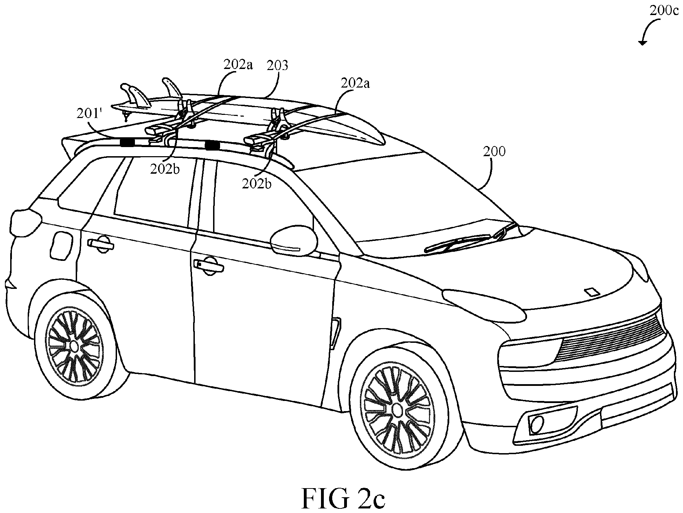

Figure 2c is a schematic drawing illustrating components of an example system 200c according to some embodiments. The system 200c is for detecting load shift of cargo on a vehicle and/or a trailer during transport, wherein cargo is restrained to the vehicle and/or the trailer by one or more restraining components. Thus, the system 200c may, for example, comprise the apparatus 400 and/or the controller 410 of Figure 4; all of which will be described later herein, as well as be configured to perform the method steps of Figure 1a and/or Figure 1b.

The system 200c comprises the following components.

Cargo 203 is loaded and restricted on the roof of a vehicle 200.

The cargo 203 is restricted on the vehicle 200 by one or more restraining components 202a and 202b.

The restraining components comprise fastening components 202a connected and/or fixated to one or more load fixation components 202b.

In the system 200c, straps, i.e., fastening components 202a, are connected and fixated to rails, i.e., load fixation components 202b, on the roof of the vehicle 200 for restraining the cargo 203 (e.g., a surfboard). The one or more restraining components, i.e., the fastening components 202a and/or load fixation components 202b, to be monitored, i.e., to obtain sensor data from, comprise the points of which the straps restraining the load are fixated to the rails (i.e., the load fixation components).

The one or more restraining components 202a and 202b are monitored by one or more sensors 201' arranged on the rails 202b, wherein the sensors 201', e.g., piezoelectric sensors, are operably connected to the one or more restraining components and configured to measure vibrations in the one or more restraining components, e.g., in the rails.

In the system 200c, the one or more sensors 201' may comprise vibration sensors configured to obtain sensor data, e.g., by measuring vibrations, caused by movement in the one or more restraining components 202a and 202b during transport.

Alternatively or additionally, the one or more sensors 201' may be operably connected to the rails and configured to measure vibrations and/or shock in the rails caused by movement in the one or more restraining components 202a and 202b during transport.

For example, the one or more sensors 201' may be embedded in the rails.

In some embodiments, the one or more sensors 201' comprise piezoelectric sensors.

Figure 3 is a schematic drawing illustrating components of an example system 300 according to some embodiments. The system 300 is for detecting load shift of cargo on a vehicle and/or a trailer during transport, wherein cargo is restrained to the vehicle and/or the trailer by one or more restraining components. Thus, the system 300 may, for example, comprise the apparatus 400 and/or the controller 410 of Figure 4; all of which will be described later herein, as well as be configured to perform the method steps of Figure 1a and/or Figure 1b.

The system 300 comprises the following components.

Cargo 203 is loaded and restricted on the roof of a vehicle 200.

The cargo 203 is restricted on the vehicle 200 by one or more restraining components 202a and 202b.

The restraining components comprise fastening components 202a connected and/or fixated to one or more load fixation components 202b.

In the system 300, straps, i.e., fastening components 202a, are connected and fixated to rails, i.e., load fixation components 202b, on the roof of the vehicle 200 for restraining the cargo 203 (e.g., a box). The one or more restraining components, i.e., the fastening components 202a and/or load fixation components 202b, to be monitored, i.e., to obtain sensor data from, comprise the points of which the straps restraining the load are fixated to the rails (i.e., load fixation components) and/or one or more sections of the actual straps (i.e., fastening components).

The one or more restraining components 202a and 202b are monitored by one or more sensors 201 arranged on the vehicle (i.e., on the roof of the vehicle) to have a non-obstructed view (i.e., a clear view) of the one or more restraining components 202a and 202b.

Alternatively or additionally, the one or more sensors 201 may be arranged on the one or more restraining components 202a and 202b to have a non-obstructed view of other restraining components 202a and 202b.

Alternatively or additionally, the one or more sensors 201 may be arranged on the cargo 203 to have a non-obstructed view of the restraining components 202a and 202b.

In the system 300, the one or more sensors 201 comprise image sensors and/or camera sensors configured to obtain sensor data, e.g., image data and/or video data, of the one or more restraining components 202a and 202b during transport.

The fastening component 202a, i.e., the strap on the right side holding the box, is illustrated to be in movement. The movement in the fastening component 202a is determined (reference to step 104 of Figure 1a and/or Figure 1b) to be of such magnitude that the cargo 203 runs a considerable risk of being load shifted.

In some embodiments, the risk of the cargo being load shifted is communicated to a user of the vehicle 200 through a notification via a display and/or a sound in the vehicle 200.

Figure 4 is a schematic block diagram illustrating an example apparatus 400 according to some embodiments. The apparatus 400 is for detecting load shift of cargo on a vehicle and/or a trailer during transport, wherein cargo is restrained to the vehicle and/or the trailer by one or more restraining components. Thus, the apparatus 400 and/or the controller 410 may, for example, be configured to perform one or more of the method steps of Figure 1a and/or Figure 1b and/or one or more of any steps otherwise described herein.

The apparatus 400 comprises a controller 410, e.g. device controlling circuitry, configured to cause obtainment of sensor data of the one or more restraining components via one or more sensors, wherein the one or more sensors are arranged on the vehicle and/or the trailer.

The controller 410 is further configured to cause reception of the obtained sensor data, comparison of the received sensor data over time in order to establish differences in the received sensor data, determination of whether any established differences in the received sensor data meet or exceed a set threshold for the one or more restraining components, wherein the set threshold is indicative of movement in the one or more restraining components capable of allowing load shift of the cargo.

The apparatus 400 comprises, as mentioned above, the controller (CNTR; e.g., control circuitry or a controlling module) 410, which may in turn comprise, (or be otherwise associated with; e.g., connected or connectable to), an obtainer 401, e.g. obtaining circuitry or obtaining module, configured to obtain sensor data of the one or more restraining components via one or more sensors, wherein the one or more sensors are arranged on the vehicle and/or the trailer (compare with step 101 of Figure 1a and/or Figure 1b).

The controller 410 further comprises, (or is otherwise associated with; e.g., connected or connectable to), a receiver 402, e.g. receiving circuitry or receiving module, configured to receive the obtained sensor data (compare with step 102 of Figure 1a and/or Figure 1b).

The controller 410 further comprises, (or is otherwise associated with; e.g., connected or connectable to), a comparer 403, e.g. comparing circuitry or comparing module, configured to compare the received sensor data over time in order to establish differences in the received sensor data (compare with step 103 of Figure 1a and/or Figure 1b).

The controller 410 further comprises, (or is otherwise associated with; e.g., connected or connectable to), a determiner 404, e.g. determining circuitry or determining module, configured to determine whether any established differences in the received sensor data meet or exceed a set threshold for the one or more restraining components, wherein the set threshold is indicative of movement in the one or more restraining components capable of allowing load shift of the cargo (compare with step 104 of Figure 1a and/or Figure 1b).

In some embodiments, the controller 410 further comprises, (or is otherwise associated with; e.g., connected or connectable to), a notifier 405, e.g. notifying circuitry or notifying module, configured to notify a user of the vehicle via a display and/or a sound in the vehicle of movement in the one or more restraining components capable of allowing load shift of the cargo (compare with step 105 of Figure 1b).

In some embodiments, the controller 410 further comprises a buffer for temporarily storing the received data before comparison.

In some embodiments, the controller 410 and/or the buffer is comprised completely or partially in the vehicle and/or remotely in a cloud environment.

In some embodiments, the apparatus 400 is operably connectable to memory comprised in a vehicle and/or in a cloud environment.

In some embodiments, the vehicle comprises the apparatus 400.

In some embodiments, the apparatus 400 is continuously active during transport for detecting load shift of cargo on the vehicle and/or the trailer or only active when the user of the vehicle activates it during transport.

The apparatus 400 may further optionally comprise, (or be otherwise associated with; e.g., connected or connectable to), in some embodiments, a transceiver TX/RX 420, e.g. transceiving circuitry or transceiving module, configured to transmit and receive radio signals e.g. in accordance with detecting load shift of cargo on a vehicle and/or a trailer during transport.

Generally, when an apparatus is referred to herein, it is to be understood as a physical product. The physical product may comprise one or more parts, such as controlling circuitry in the form of one or more controllers, one or more processors, or the like.

The described embodiments and their equivalents may be realized in software or hardware or a combination thereof. The embodiments may be performed by general purpose circuitry. Examples of general purpose circuitry include digital signal processors (DSP), central processing units (CPU), Graphics Processing Units (GPU), co-processor units, field programmable gate arrays (FPGA) and other programmable hardware. Alternatively or additionally, the embodiments may be performed by specialized circuitry, such as application specific integrated circuits (ASIC). The general purpose circuitry and/or the specialized circuitry may, for example, be associated with or comprised in an apparatus such as a wireless communication device.

Embodiments may appear within an electronic apparatus (such as a wireless communication device) comprising arrangements, circuitry, and/or logic according to any of the embodiments described herein. Alternatively or additionally, an electronic apparatus (such as a wireless communication device) may be configured to perform methods according to any of the embodiments described herein.

According to some embodiments, a computer program product comprises a computer readable medium such as, for example a universal serial bus (USB) memory, a plug-in card, an embedded drive or a read only memory (ROM).

Figure 5 illustrates an example computer readable medium in the form of a compact disc (CD) ROM 500. The computer readable medium has stored thereon a computer program comprising program instructions. The computer program is loadable into a data processor (PROC) 520, which may, for example, be comprised in a wireless communication device 510. When loaded into the data processor, the computer program may be stored in a memory (MEM) 530 associated with or comprised in the data processor.

In some embodiments, the computer program may, when loaded into and run by the data processing unit, cause execution of method steps according to, for example, Figure 1a and/or Figure 1b and/or one or more of any steps otherwise described herein.

In some embodiments, the computer program may, when loaded into and run by the data processing unit, cause execution of steps according to, for example, Figure 1a and/or Figure 1b and/or one or more of any steps otherwise described herein.

Generally, all terms used herein are to be interpreted according to their ordinary meaning in the relevant technical field, unless a different meaning is clearly given and/or is implied from the context in which it is used.

Reference has been made herein to various embodiments. However, a person skilled in the art would recognize numerous variations to the described embodiments that would still fall within the scope of the claims.

For example, the method embodiments described herein discloses example methods through steps being performed in a certain order. However, it is recognized that these sequences of events may take place in another order without departing from the scope of the claims. Furthermore, some method steps may be performed in parallel even though they have been described as being performed in sequence. Thus, the steps of any methods disclosed herein do not have to be performed in the exact order disclosed, unless a step is explicitly described as following or preceding another step and/or where it is implicit that a step must follow or precede another step.

In the same manner, it should be noted that in the description of embodiments, the partition of functional blocks into particular units is by no means intended as limiting. Contrarily, these partitions are merely examples. Functional blocks described herein as one unit may be split into two or more units. Furthermore, functional blocks described herein as being implemented as two or more units may be merged into fewer (e.g. a single) unit.

Hence, it should be understood that the details of the described embodiments are merely examples brought forward for illustrative purposes, and that all variations that fall within the scope of the claims are intended to be embraced therein.

## Claims

1. A method for detecting load shift of cargo (203) on a vehicle (200) and/or a trailer (200') during transport, wherein cargo is restrained to the vehicle and/or the trailer by one or more restraining components (202a, 202b), the method comprising:
obtaining (101) sensor data of the one or more restraining components via one or more sensors (201, 201'), wherein the one or more sensors are arranged on the vehicle and/or the trailer and the sensor data comprises image data and/or video data,
receiving (102) the obtained sensor data in a controlling circuitry,
comparing (103) the received sensor data over time in the controlling circuitry in order to establish differences in the received sensor data, wherein the comparing of the received sensor data comprises a frame-by-frame analysis of the obtained image data and/or video data for establishing differences per frame,
**characterised in that** the method further comprises:
determining (104) in the controlling circuitry whether any established differences in the received sensor data meet or exceed a set threshold for the one or more restraining components (202a, 202b), wherein the set threshold is indicative of movement in the one or more restraining components (202a, 202b) capable of allowing load shift of the cargo, by determining a time between a first and a second frame and a position of the monitored restraining component (202a, 202b) at the first respectively at the second frame in order to establish if there are any differences in position of the restraining component (202a, 202b).

2. The method according to claim 1, wherein the one or more sensors (201) are arranged on the vehicle and/or the trailer to have a non-obstructed view of the one or more restraining components (202a, 202b).

3. The method according to claim 1, wherein the one or more sensors (201') are arranged on the vehicle and/or the trailer to be operably connected to the one or more restraining components (202b) and configured to measure vibrations in the one or more restraining components.

4. The method according to any of claims 1-3, wherein the one or more restraining components (202a, 202b) comprise one or more fastening components (202a) connected and/or fixated to one or more load fixation components (202b).

5. The method according to claim 4, wherein the one or more load fixation components (202b) comprise one or more of: rails, tie-downs, chassi, and towbar.

6. The method according to claim 4, wherein the one or more fastening components (202a) comprise one or more of: ropes, nets, chains, ratchet straps, tape, wire cable, rubber cord, and straps.

7. The method according to any of claims 1-6, wherein the one or more sensors comprise image sensors (201) and/or camera sensors (201) and/or piezoelectric sensors (201').

8. The method according to any of claims 1-7, wherein the sensor data comprises vibration data.

9. The method according to any of claims 1-8, wherein the controlling circuitry further comprises a buffer for temporarily storing the received data before comparison.

10. The method according to any of claims 1-9, wherein the controlling circuitry and/or the buffer is comprised completely or partially in the vehicle and/or remotely in a cloud environment.

11. The method according to any of claims 1-10, wherein cargo (203) is restrained to the roof of the vehicle (200) and/or on the trailer (200').

12. The method according to any of claims 1-11, the method further comprising:
notifying (105) a user of the vehicle (200) via a display and/or a sound in the vehicle of movement in the one or more restraining components (202a, 202b) capable of allowing load shift of the cargo (203).

13. A computer program product comprising a non-transitory computer readable medium, having thereon a computer program comprising program instructions, the computer program being loadable into a data processing unit and configured to cause execution of the method according to any of claims 1 through 12 when the computer program is run by the data processing unit.

14. A system for detecting load shift of cargo (203) on a vehicle (200) and/or a trailer (200') during transport, wherein cargo is restrained to the vehicle and/or the trailer by one or more restraining components (202a, 202b), the system comprising controlling circuitry configured to cause:
obtainment of sensor data of the one or more restraining components via one or more sensors (201, 201'), wherein the one or more sensors are arranged on the vehicle and/or the trailer and the sensor data comprises image data and/or video data,
reception of the obtained sensor data,
comparison of the received sensor data over time in order to establish differences in the received sensor data, wherein the comparison of the received sensor data comprises a frame-by-frame analysis of the obtained image data and/or video data for establishing differences per frame,
**characterised in that** the controlling circuitry is further configured to cause:
determination of whether any established differences in the received sensor data meet or exceed a set threshold for the one or more restraining components (202a, 202b), wherein the set threshold is indicative of movement in the one or more restraining components (202a, 202b) capable of allowing load shift of the cargo, by determination of a time between a first and a second frame and a position of the monitored restraining component (202a, 202b) at the first respectively at the second frame in order to establish if there are any differences in position of the restraining component (202a, 202b).

15. The system according to claim 14, wherein the one or more sensors (201) are arranged on the vehicle and/or the trailer to have a non-obstructed view of the one or more restraining components (202a, 202b).

16. The system according to claim 14, wherein the one or more sensors (201') are arranged on the vehicle and/or the trailer to be operably connected to the one or more restraining components (202b) and configured to measure vibrations in the one or more restraining components.

17. The system according to any of claims 14-16, wherein the one or more restraining components (202a, 202b) comprise one or more fastening components (202a) connected and/or fixated to one or more load fixation components (202b).

18. The system according to any of claim 14-17, wherein the controlling circuitry further comprises a buffer for temporarily storing the received data before comparison.

19. The system according to any of claims 14-18, wherein the controlling circuitry and/or the buffer is comprised completely or partially in the vehicle and/or remotely in a cloud environment.

20. The system according to any of claims 14-19, wherein the system is further configured to cause notification to a user of the vehicle (200) via a display and/or a sound in the vehicle of movement in the one or more restraining components capable of allowing load shift of the cargo (203).

21. The system according to any of claims 14-20, wherein the system is continuously active during transport for detecting load shift of cargo on the vehicle and/or the trailer or only active when the user of the vehicle activates it during transport.

22. A vehicle (200) comprising the system according to any of claims 14-21.

## Patentansprüche

1. Verfahren zum Erfassen der Lastverlagerung von Ladegut (203) auf einem Fahrzeug (200) und/oder einem Anhänger (200') während des Transports, wobei das Ladegut an dem Fahrzeug und/oder dem Anhänger von einer oder mehreren Rückhaltekomponenten (202a, 202b) zurückgehalten wird, wobei das Verfahren Folgendes umfasst:
Erhalten (101) von Sensordaten der einen oder der mehreren Rückhaltekomponenten über einen oder mehrere Sensoren (201, 201'), wobei der eine oder die mehreren Sensoren auf dem Fahrzeug und/oder dem Anhänger angeordnet sind and die Sensordaten Bilddaten und/oder Videodaten umfassen,
Empfangen (102) der erhaltenen Sensordaten in einer Steuerschaltung,
Vergleichen (103) der empfangenen Sensordaten im Zeitverlauf in der Steuerschaltung, um Unterschiede in den erhaltenen Sensordaten zu ermitteln, wobei das Vergleichen der empfangenen Sensordaten eine Einzelbildanalyse der erhaltenen Bilddaten und/oder Videodaten zum Ermitteln von Unterschieden pro Einzelbild umfasst, **dadurch gekennzeichnet, dass** das Verfahren ferner Folgendes umfasst:
Bestimmen (104) in der Steuerschaltung, ob festgestellte Unterschiede in den erhaltenen Sensordaten einen eingestellten Schwellenwert für die eine oder die mehreren Rückhaltekomponenten (202a, 202b) erreichen oder überschreiten, wobei der eingestellte Schwellenwert ein Anzeichen für eine Bewegung in der einen oder den mehreren Rückhaltekomponenten (202a, 202b) ist, die eine Lastverlagerung des Ladeguts ermöglichen kann, durch Bestimmen einer Zeit zwischen einem ersten und einem zweiten Einzelbild und einer Position der überwachten Rückhaltekomponente (202a, 202b) auf dem ersten beziehungsweise auf dem zweiten Einzelbild, um zu ermitteln, ob es Positionsunterschiede der Rückhaltekomponente (202a, 202b) gibt.

2. Verfahren nach Anspruch 1, wobei der eine oder die mehreren Sensoren (201) auf dem Fahrzeug und/oder dem Anhänger angeordnet sind, um eine ungehinderte Sicht auf die eine oder die mehreren Rückhaltekomponenten (202a, 202b) zu haben.

3. Verfahren nach Anspruch 1, wobei der eine oder die mehreren Sensoren (201') auf dem Fahrzeug und/oder dem Anhänger angeordnet sind, um mit der einen oder den mehreren Rückhaltekomponenten (202b) wirkverbunden zu sein, und dazu konfiguriert sind, Schwingungen in der einen oder den mehreren Rückhaltekomponenten zu messen.

4. Verfahren nach einem der Ansprüche 1-3, wobei die eine oder die mehreren Rückhaltekomponenten (202a, 202b) eine oder mehrere Befestigungskomponenten (202a) umfassen, die mit einer oder mehreren Lastfixierungskomponenten (202b) verbunden und/oder fixiert sind.

5. Verfahren nach Anspruch 4, wobei die eine oder die mehreren Lastfixierungskomponenten (202b) eines oder mehrere von Folgendem umfassen: Schienen, Zurrgurte, Fahrgestell, und Anhängerkupplung.

6. Verfahren nach Anspruch 4, wobei die eine oder die mehreren Befestigungskomponenten (202a) eines oder mehrere von Folgendem umfassen: Seile, Netze, Ketten, Ratschengurte, Klebeband, Drahtseil, Gummischnur und Gurte.

7. Verfahren nach einem der Ansprüche 1-6, wobei der eine oder die mehreren Sensoren Bildsensoren (201) und/oder Kamerasensoren (201) und/oder piezoelektrische Sensoren (201') umfassen.

8. Verfahren nach einem der Ansprüche 1-7, wobei die Sensordaten Schwingungsdaten umfassen.

9. Verfahren nach einem der Ansprüche 1-8, wobei die Steuerschaltung ferner einen Puffer zum vorübergehenden Speichern der empfangenen Daten vor dem Vergleich umfasst.

10. Verfahren nach einem der Ansprüche 1-9, wobei die Steuerschaltung und/oder der Puffer vollständig oder teilweise in dem Fahrzeug und/oder aus der Ferne in einer Cloud-Umgebung umfasst ist.

11. Verfahren nach einem der Ansprüche 1-10, wobei das Ladegut (203) auf dem Dach des Fahrzeugs (200) und/oder auf dem Anhänger (200') zurückgehalten wird.

12. Verfahren nach einem der Ansprüche 1-11, wobei das Verfahren ferner Folgendes umfasst:
Benachrichtigen (105) eines Benutzers des Fahrzeugs (200) über eine Anzeige und/oder einen Ton in dem Fahrzeug über eine Bewegung in der einen oder den mehreren Rückhaltekomponenten (202a, 202b), die eine Lastverlagerung des Ladeguts (203) ermöglichen kann.

13. Computerprogrammprodukt, das ein nicht-flüchtiges computerlesbares Medium umfasst, auf dem sich ein Computerprogramm befindet, das Programmbefehle umfasst, wobei das Computerprogramm in eine Datenverarbeitungseinheit ladbar und dazu konfiguriert ist, die Ausführung des Verfahrens nach einem der Ansprüche 1 bis 12 zu veranlassen, wenn das Computerprogramm von der Datenverarbeitungseinheit ausgeführt wird.

14. System zum Erfassen der Lastverlagerung von Ladegut (203) auf einem Fahrzeug (200) und/oder einem Anhänger (200') während des Transports, wobei das Ladegut auf dem Fahrzeug und/oder dem Anhänger von einer oder mehreren Rückhaltekomponenten (202a, 202b) zurückgehalten wird, wobei das System eine Steuerschaltung umfasst, die dazu konfiguriert ist, Folgendes zu veranlassen:
Erhalt von Sensordaten der einen oder der mehreren Rückhaltekomponenten über einen oder mehrere Sensoren (201, 201'), wobei der eine oder die mehreren Sensoren auf dem Fahrzeug und/oder dem Anhänger angeordnet sind und die Sensordaten Bilddaten und/oder Videodaten umfassen,
Empfang der erhaltenen Sensordaten,
Vergleich der empfangenen Sensordaten im Zeitverlauf, um Unterschiede in den empfangenen Sensordaten zu ermitteln, wobei der Vergleich der empfangenen Sensordaten eine Einzelbildanalyse der erhaltenen Bilddaten und/oder Videodaten zum Ermitteln von Unterschieden pro Einzelbild umfasst,
**dadurch gekennzeichnet, dass** die Steuerschaltung ferner dazu konfiguriert ist, Folgendes zu veranlassen:
Bestimmung, ob ermittelte Unterschiede in den empfangenen Sensordaten einen eingestellten Schwellenwert für die eine oder die mehreren Rückhaltekomponenten (202a, 202b) erreichen oder überschreiten, wobei der eingestellte Schwellenwert ein Anzeichen für eine Bewegung in der einen oder den mehreren Rückhaltekomponenten (202a, 202b) ist, die eine Lastverlagerung des Ladeguts ermöglichen kann, durch Bestimmung einer Zeit zwischen einem ersten und einem zweiten Einzelbild und einer Position der überwachten Rückhaltekomponente (202a, 202b) auf dem ersten beziehungsweise auf dem zweiten Einzelbild, um zu ermitteln, ob es Positionsunterschiede der Rückhaltekomponente (202a, 202b) gibt.

15. System nach Anspruch 14, wobei der eine oder die mehreren Sensoren (201) auf dem Fahrzeug und/oder dem Anhänger angeordnet sind, um eine ungehinderte Sicht auf die eine oder die mehreren Rückhaltekomponenten (202a, 202b) zu haben.

16. System nach Anspruch 14, wobei der eine oder die mehreren Sensoren (201') auf dem Fahrzeug und/oder dem Anhänger angeordnet sind, um mit der einen oder den mehreren Rückhaltekomponenten (202b) wirkverbunden zu sein, und dazu konfiguriert sind, Schwingungen in der einen oder den mehreren Rückhaltekomponenten zu messen.

17. System nach einem der Ansprüche 14-16, wobei die eine oder die mehreren Rückhaltekomponenten (202a, 202b) eine oder mehrere Befestigungskomponenten (202a) umfassen, die mit einer oder mehreren Lastfixierungskomponenten (202b) verbunden und/oder fixiert sind.

18. System nach einem der Ansprüche 14-17, wobei die Steuerschaltung ferner einen Puffer zum vorübergehenden Speichern der empfangenen Daten vor dem Vergleich umfasst.

19. System nach einem der Ansprüche 14-18, wobei die Steuerschaltung und/oder der Puffer vollständig oder teilweise in dem Fahrzeug und/oder aus der Ferne in einer Cloud-Umgebung umfasst ist.

20. System nach einem der Ansprüche 14-19, wobei das System ferner dazu konfiguriert ist, eine Benachrichtigung an einen Benutzer des Fahrzeugs (200) über eine Anzeige und/oder einen Ton in dem Fahrzeug über eine Bewegung in der einen oder den mehreren Rückhaltekomponenten, die eine Lastverlagerung des Ladeguts (203) ermöglichen kann, zu veranlassen.

21. System nach einem der Ansprüche 14-20, wobei das System während des Transports zum Erfassen der Lastverlagerung von Ladegut auf dem Fahrzeug und/oder dem Anhänger kontinuierlich aktiv ist oder nur aktiv ist, wenn der Benutzer des Fahrzeugs es während des Transports aktiviert.

22. Fahrzeug (200), das das System nach einem der Ansprüche 14-21 umfasst.

## Revendications

1. Procédé pour détecter un déplacement de charge de cargaison (203) sur un véhicule (200) et/ou une remorque (200') pendant le transport, dans lequel la cargaison est retenue au véhicule et/ou à la remorque par un ou plusieurs composants de retenue (202a, 202b), le procédé comprenant :
l'obtention (101) de données de capteur de l'un ou les plusieurs composants de retenue par le biais de l'un ou les plusieurs capteurs (201, 201'), dans lequel l'un ou les plusieurs capteurs sont agencés sur le véhicule et/ou la remorque et les données de capteur comprennent des données d'image et/ ou des données vidéo,
la réception (102) des données de capteur obtenues dans un circuit de commande,
la comparaison (103) des données de capteur reçues au fil du temps dans le circuit de commande afin d'établir des différences dans les données de capteur reçues, dans lequel la comparaison des données de capteur reçues comprend une analyse image par image des données d'image et/ou des données vidéo obtenues pour établir des différences par image, **caractérisé en ce que** le procédé comprend également :
la détermination (104) dans le circuit de commande du fait de savoir si des différences établies dans les données de capteur reçues atteignent ou dépassent un seuil défini pour l'un ou les plusieurs composants de retenue (202a, 202b), dans lequel le seuil défini indique un mouvement dans l'un ou les plusieurs composants de retenue (202a, 202b) capables de permettre un déplacement de charge de la cargaison, en déterminant un temps entre une première et une seconde image et une position du composant de retenue surveillé (202a, 202b) au niveau de la première respectivement au niveau de la seconde image afin d'établir s'il existe des différences de position du composant de retenue (202a, 202b).

2. Procédé selon la revendication 1, dans lequel l'un ou les plusieurs capteurs (201) sont agencés sur le véhicule et/ou la remorque pour avoir une vue non obstruée de l'un ou les plusieurs composants de retenue (202a, 202b).

3. Procédé selon la revendication 1, dans lequel l'un ou les plusieurs capteurs (201') sont agencés sur le véhicule et/ou la remorque pour être connectés fonctionnellement à l'un ou les plusieurs composants de retenue (202b) et configurés pour mesurer des vibrations dans l'un ou les plusieurs composants de retenue.

4. Procédé selon l'une quelconque des revendications 1 à 3, dans lequel l'un ou les plusieurs composants de retenue (202a, 202b) comprennent un ou plusieurs composants d'attache (202a) connectés et/ou fixés à un ou plusieurs composants de fixation de charge (202b).

5. Procédé selon la revendication 4, dans lequel l'un ou les plusieurs composants de fixation de charge (202b) comprennent un ou plusieurs parmi : des rails, des attaches, un châssis et une barre de remorquage.

6. Procédé selon la revendication 4, dans lequel l'un ou les plusieurs composants d'attache (202a) comprennent un ou plusieurs parmi : des cordes, des filets, des chaînes, des sangles à cliquet, un ruban, un câble métallique, un cordon en caoutchouc et des sangles.

7. Procédé selon l'une quelconque des revendications 1 à 6, dans lequel l'un ou les plusieurs capteurs comprennent des capteurs d'image (201) et/ou des capteurs de caméra (201) et/ou des capteurs piézoélectriques (201').

8. Procédé selon l'une quelconque des revendications 1 à 7, dans lequel les données de capteur comprennent des données de vibration.

9. Procédé selon l'une quelconque des revendications 1 à 8, dans lequel le circuit de commande comprend également un tampon pour stocker temporairement les données reçues avant la comparaison.

10. Procédé selon l'une quelconque des revendications 1 à 9, dans lequel le circuit de commande et/ou le tampon est/sont compris complètement ou partiellement dans le véhicule et/ou à distance dans un environnement cloud.

11. Procédé selon l'une quelconque des revendications 1 à 10, dans lequel la cargaison (203) est retenue sur le toit du véhicule (200) et/ou sur la remorque (200').

12. Procédé selon l'une quelconque des revendications 1 à 11, le procédé comprenant également :
la notification (105) à un utilisateur du véhicule (200) par le biais d'un affichage et/ou d'un son dans le véhicule du mouvement dans l'un ou les plusieurs composants de retenue (202a, 202b) capables de permettre un déplacement de charge de la cargaison (203).

13. Produit-programme informatique comprenant un support non transitoire lisible par ordinateur, sur lequel se trouve un programme informatique comprenant des instructions de programme, le programme informatique étant chargeable dans une unité de traitement de données et configuré pour entraîner la réalisation du procédé selon l'une quelconque des revendications 1 à 12 lorsque le programme informatique est exécuté par l'unité de traitement de données.

14. Système de détection de déplacement de charge de cargaison (203) sur un véhicule (200) et/ou une remorque (200') pendant le transport, dans lequel la cargaison est retenue au véhicule et/ou à la remorque par un ou plusieurs composants de retenue (202a, 202b), le système comprenant un circuit de commande configuré pour entraîner :
l'obtention de données de capteur de l'un ou les plusieurs composants de retenue par le biais d'un ou de plusieurs capteurs (201, 201'), dans lequel l'un ou les plusieurs capteurs sont agencés sur le véhicule et/ou la remorque et les données de capteur comprennent des données d'image et/ou données vidéo,
la réception des données de capteur obtenues,
la comparaison des données de capteur reçues au fil du temps afin d'établir des différences dans les données de capteur reçues, dans lequel la comparaison des données de capteur reçues comprend une analyse image par image des données d'image obtenues et/ou des données vidéo pour établir des différences par image, **caractérisé en ce que** le circuit de commande est en outre configuré pour entraîner :
la détermination du fait de savoir si des différences établies dans les données de capteur reçues atteignent ou dépassent un seuil défini pour l'un ou les plusieurs composants de retenue (202a, 202b), dans lequel le seuil défini indique un mouvement dans l'un ou les plusieurs composants de retenue (202a, 202b) capables de permettre un déplacement de charge de la cargaison, par la détermination d'un temps entre une première et une seconde image et d'une position du composant de retenue surveillé (202a, 202b) au niveau de la première respectivement au niveau de la seconde image afin d'établir s'il y a des différences de position du composant de retenue (202a, 202b).

15. Système selon la revendication 14, dans lequel l'un ou les plusieurs capteurs (201) sont agencés sur le véhicule et/ou la remorque pour avoir une vue non obstruée de l'un ou les plusieurs composants de retenue (202a, 202b).

16. Système selon la revendication 14, dans lequel l'un ou les plusieurs capteurs (201') sont agencés sur le véhicule et/ou la remorque pour être connectés fonctionnellement à l'un ou les plusieurs composants de retenue (202b) et configurés pour mesurer des vibrations dans l'un ou les plusieurs composants de retenue.

17. Système selon l'une quelconque des revendications 14 à 16, dans lequel l'un ou les plusieurs composants de retenue (202a, 202b) comprennent un ou plusieurs composants d'attache (202a) connectés et/ou fixés à un ou plusieurs composants de fixation de charge (202b).

18. Système selon l'une quelconque des revendications 14 à 17, dans lequel le circuit de commande comprend également un tampon pour stocker temporairement les données reçues avant la comparaison.

19. Système selon l'une quelconque des revendications 14 à 18, dans lequel le circuit de commande et/ou le tampon est/sont compris complètement ou partiellement dans le véhicule et/ou à distance dans un environnement cloud.

20. Système selon l'une quelconque des revendications 14 à 19, dans lequel le système est en outre configuré pour entraîner une notification à un utilisateur du véhicule (200) par le biais d'un affichage et/ou d'un son dans le véhicule du mouvement dans l'un ou les plusieurs systèmes de retenue capables de permettre un déplacement de charge de la cargaison (203) .

21. Système selon l'une quelconque des revendications 14 à 20, dans lequel le système est actif en permanence pendant le transport pour détecter un déplacement de charge de cargaison sur le véhicule et/ou la remorque ou actif uniquement lorsque l'utilisateur du véhicule l'active pendant le transport.

22. Véhicule (200) comprenant le système selon l'une quelconque des revendications 14 à 21.
